# EUROPEAN PATENT APPLICATION

(11) **EP 4 738 466 A1**
(43) Date of publication of application: **06.05.2026**
(21) Application number: 24830139.2
(22) Date of filing: 30.04.2024
(51) Int. Cl.: H01M 4/38, H01M 4/36, H01M 4/587, H01M 4/134, H01M 10/0525

(54) **SILICON-CARBON NEGATIVE ELECTRODE MATERIAL, AND PREPARATION METHOD THEREFOR AND USE THEREOF**

(30) Priority: 29.06.2023 CN 202310786717
(71) Applicant: Ningde Amperex Technology Limited, Ningde, Fujian 352100 (CN)
(72) Inventor: YI, Zheng, Ningde, Fujian 352100 (CN); SHAO, Wenlong, Ningde, Fujian 352100 (CN); SU, Yisong, Ningde, Fujian 352100 (CN); XIE, Yuansen, Ningde, Fujian 352100 (CN)
(74) Representative: Kraus & Lederer PartGmbB
(86) International application number: PCT/CN2024/090910
(87) International publication number: WO 2025/001491

(57) **Abstract**

A silicon-carbon negative electrode material includes a core and a shell. The core includes a porous carbon skeleton and silicon dispersed in pores of the porous carbon skeleton. Carbon nanotubes are wrapped and dispersed in the porous carbon skeleton. In the silicon-carbon negative electrode material, the content of silicon elements in the silicon-carbon negative electrode material is 25 wt% to 55 wt%. The shell includes a carbon material. In a linear scanning electron microscope and energy-dispersive X-ray spectrum of a cross section of the silicon-carbon negative electrode material, the standard deviation of content changes of the silicon elements from the center to the edge of the cross section does not exceed 200. Further provided are an electrochemical apparatus and a preparation method for a silicon-carbon negative electrode material. This application can improve electrical conductivity and reduce expansion, thereby prolonging the service life.

## Description

### CROSS-REFERENCE TO RELATED APPLICATIONS

This application claims priority to Chinese Patent Application No. 202310786717.2, filed with the Chinese Patent Office on June 29, 2023 and entitled "SILICON-CARBON NEGATIVE ELECTRODE MATERIAL, AND PREPARATION METHOD THEREFOR AND APPLICATION THEREOF", the content of which is incorporated herein by reference in its entirety.

### TECHNICAL FIELD

This application relates to the field of electrochemical energy storage, and in particular, to a silicon-carbon negative electrode material and a preparation method therefor, a negative electrode plate applying the silicon-carbon negative electrode material, and an electrochemical apparatus applying the negative electrode plate.

### BACKGROUND

By virtue of high volumetric and mass energy densities, environmental friendliness, high operating voltage, small size, light weight, long service life and other advantages, lithium-ion batteries are widely applied in the field of portable consumer electronics. With the high-speed development of electric vehicles and portable electronic devices in recent years, people have higher and higher demands on energy density, safety, cycle performance and the like of batteries, and expect the generation of new lithium-ion batteries with improved comprehensive performance. The energy density and the cycle performance are the key technical problems urgent to be solved. Improving active materials in electrodes is one of research directions for solving the above problems.

At present, graphite is the most widely used negative electrode material, and has the advantages of high efficiency, stable charging and discharging platforms, etc. However, the performance of the current commercial graphite is almost developed to the extreme extent, and the lower capacity and the potential safety hazards of lithium dendrites hinder the further application thereof. Compared with the graphite as the negative electrode material, by virtue of the characteristics of ultrahigh theoretical specific capacity, suitable operating voltage, etc., elemental silicon is considered to be the most promising negative electrode material of lithium batteries, which can replace graphite. However, the low electrical conductivity and large volume expansion during alloying/dealloying severely restrict the large-scale application of the elemental silicon in lithium-ion batteries.

### SUMMARY

This application provides a silicon-carbon negative electrode material which can improve electrical conductivity and reduce expansion.

In addition, this application further provides a negative electrode plate applying the silicon-carbon negative electrode material, and an electrochemical apparatus applying the negative electrode plate. This application further provides a preparation method for the silicon-carbon negative electrode material.

A first aspect of this application provides a silicon-carbon negative electrode material. The silicon-carbon negative electrode material includes a core and a shell. The core includes a porous carbon skeleton and silicon dispersed in pores of the porous carbon skeleton. Carbon nanotubes are wrapped and dispersed in the porous carbon skeleton. A content of silicon elements in the silicon-carbon negative electrode material is 25 wt% to 55 wt%. The shell includes a carbon material. In a linear scanning electron microscope and energy-dispersive X-ray spectrum of a cross section of the silicon-carbon negative electrode material, a standard deviation of content changes of the silicon elements from a center to an edge of the cross section does not exceed 200.

As the carbon nanotubes in the silicon-carbon negative electrode material of this application have good electrical conductivity and mechanical properties, the carbon nanotubes with a specified content dispersed in the porous carbon skeleton can, on the one hand, improve the electrical conductivity of the silicon-carbon negative electrode material, and on the other hand, improve the mechanical properties of the silicon-carbon negative electrode material, and restrain the expansion of the silicon-carbon negative electrode material, thereby facilitating improvement in the structural stability. Moreover, according to the linear scanning electron microscope and energy-dispersive X-ray spectrum of the cross section of the silicon-carbon negative electrode material, it can be seen that the silicon elements in the silicon-carbon negative electrode material are distributed uniformly, thereby facilitating further improvement in the electrical conductivity and mechanical properties of the silicon-carbon negative electrode material. When the above silicon-carbon negative electrode material is applied to the negative electrode plate of the electrochemical apparatus, the electrical conductivity of the silicon-carbon negative electrode material is improved, such that the trapping possibility of lithium in the silicon-carbon negative electrode material can be improved, so as to improve the delithiation capacity of the electrochemical apparatus and the first charge and discharge properties. Moreover, the carbon nanotubes can also alleviate the volume expansion of silicon carbon during lithiation, and alleviate expansion pulverization and improve structural stability of the silicon carbon in charge and discharge, so as to improve the cycle performance thereof.

Based on the first aspect, in some possible implementations, an electrical conductivity of the silicon-carbon negative electrode material is 9 S/cm to 30 S/cm. In the above possible implementations, the electrical conductivity within a specified range is conducive to guaranteeing the electrical conductivity of the silicon-carbon negative electrode material, thereby further improving the cycle performance of the electrochemical apparatus applying the silicon-carbon negative electrode material.

Based on the first aspect, in some possible implementations, a particle elastic modulus of the silicon-carbon negative electrode material is 4 GPa to 10 GPa. The particle elastic modulus within a specified range is conducive to improving the structural stability of the silicon-carbon negative electrode material, thereby facilitating further improvement in the expansion and cycle performance of the electrochemical apparatus applying the silicon-carbon negative electrode material.

Based on the first aspect, in the silicon-carbon negative electrode material, a content of the carbon nanotubes is 0.2 wt% to 7.0 wt%. The content of the carbon nanotubes within this range can further alleviate the volume expansion of the silicon carbon during lithiation, and can control the formation of the pores during preparation of the porous carbon skeleton, reduce the ratio of large pores and improve the deposition uniformity of silicon, thereby further improving the cycle performance of the electrochemical apparatus and reducing the cycle expansion rate of the electrochemical apparatus.

Based on the first aspect, in some possible implementations, the silicon-carbon negative electrode material satisfies at least one of the following conditions: (1) an X-ray diffraction pattern of the silicon-carbon negative electrode material has a characteristic peak within a range of 20° to 30°, and a peak half width of the characteristic peak is greater than 2°; (2) a Raman spectrum of the silicon-carbon negative electrode material has a characteristic peak within a range of 450cm⁻¹ to 500 cm⁻¹; and (3) a particle size Dv50 of the silicon-carbon negative electrode material is 3 µm to 20 µm, and a particle size Dv99 of the silicon-carbon negative electrode material is 3 µm to 20 µm.

In the above possible implementations, it can be seen from the characteristics of the X-ray diffraction pattern of the silicon-carbon negative electrode material that the pores in the porous carbon skeleton are micropores, that is, a diameter of 90% of pores in the porous carbon skeleton is less than 2 nm, that is to say, it is conducive to causing the size of the silicon of the porous carbon skeleton intercalated in the silicon-carbon negative electrode material to be mostly less than 2 nm, thereby facilitating further reduction of the expansion of the silicon-carbon negative electrode material. It can be seen from the characteristics of the Raman spectrum of the silicon-carbon negative electrode material that the silicon in the silicon-carbon negative electrode material is small in size and amorphous, thereby facilitating further reduction of the expansion of the silicon-carbon negative electrode material. In addition, the silicon-carbon negative electrode material within the specified particle size range is more smooth during subsequent processing such as stirring and coating for preparing the negative electrode plate, and is easy to match graphite.

Based on the first aspect, in some possible implementations, a volume of pores having a diameter of greater than 2 nm in the silicon-carbon negative electrode material is greater than a volume of pores having a diameter of 2 nm or less. In some possible implementations, the volume of the pores with the diameter of greater than 2 nm ranges from 0.04 to 0.20. In the above possible implementations, as the micropores have a better adsorption effect, the silicon is preferentially adsorbed and deposited in the micropores, and given that the diameter of 90% of pores in the porous carbon skeleton is less than 2 nm, it can be seen that the size of the silicon in the silicon-carbon negative electrode material is mostly less than 2 nm, thereby facilitating further reduction of the expansion of the silicon-carbon negative electrode material.

A second aspect of this application provides a negative electrode plate. The negative electrode plate includes a current collector and a negative active layer. The negative active layer includes a negative active material, and the negative active material includes the above-mentioned silicon-carbon negative electrode material.

The negative electrode plate of this application improves the electrical conductivity of the silicon-carbon negative electrode material by means of the uniform distribution of carbon nanotubes and silicon elements, can improve the trapping possibility of lithium in the silicon-carbon negative electrode material, so as to improve the delithiation capacity of the electrochemical apparatus and the first charge and discharge properties. Moreover, the carbon nanotubes can also alleviate the volume expansion of silicon carbon during lithiation, and in view of the uniform distribution of the silicon elements, and alleviate expansion pulverization and improve structural stability of the silicon carbon in charge and discharge, so as to improve the cycle performance thereof.

Based on the second aspect, in some possible implementations, the negative active material further includes graphite. In the negative active material, a content of the silicon-carbon negative electrode material is 5 wt% to 40 wt%, and a content of the graphite is 95 wt% to 60 wt%.

In the above possible implementations, the silicon-carbon negative electrode material with the specified content can effectively reduce the influence of the silicon expansion on the negative electrode plate while fully utilizing the characteristics of the silicon such as ultrahigh theoretical specific capacity and suitable operating voltage, thereby facilitating improvement in the initial coulombic efficiency, energy density and cycle performance of the negative electrode plate. Specifically, in a case that the content of the silicon-carbon negative electrode material is too high, the volume expansion of the negative active layer is obvious, and the cycle performance deteriorates; and in a case that the content of the silicon-carbon negative electrode material is too low, it is adverse to improving the initial coulombic efficiency. As the graphite has a certain flexibility, the graphite matches the silicon-carbon negative electrode material, which can alleviate the volume expansion of the negative active layer. In addition, the negative electrode plate can also fully take the advantages of the silicon-carbon negative electrode material and the graphite to achieve the better electrochemical performance.

A third aspect of this application provides an electrochemical apparatus. The electrochemical apparatus includes the above-mentioned negative electrode plate.

In the electrochemical apparatus of this application, the negative electrode plate thereof improves the electrical conductivity of the silicon-carbon negative electrode material by means of the uniform distribution of carbon nanotubes and silicon elements, and can improve the trapping possibility of lithium in the silicon-carbon negative electrode material, so as to improve the delithiation capacity of the electrochemical apparatus and the first charge and discharge properties. Moreover, the carbon nanotubes can also alleviate the volume expansion of silicon carbon during lithiation, and in view of the uniform distribution of the silicon elements, and alleviate expansion pulverization and improve structural stability of the silicon carbon in charge and discharge, so as to improve the cycle performance thereof.

A fifth aspect of this application provides a preparation method for the above-mentioned silicon-carbon negative electrode material. The preparation method includes: mixing resin and the carbon nanotubes to form a mixture, and curing the mixture; carbonizing the cured mixture and then activating the mixture to obtain the porous carbon skeleton; and performing silane deposition on the porous carbon skeleton to form the core, and then forming the shell by alkane.

In the preparation method for the silicon-carbon negative electrode material of this application, firstly mixing the resin and the carbon nanotubes to form the mixture, and after curing, carbonizing the mixture to form the porous skeleton, this is conducive to dispersing the carbon nanotubes in the porous skeleton, thereby facilitating improvement in the constraint of the carbon nanotubes on the prepared silicon-carbon negative electrode material, so as to alleviate the volume expansion of the silicon-carbon negative electrode material to alleviate expansion pulverization and improve structural stability of the silicon carbon in charge and discharge and the cycle performance thereof. Moreover, it also facilitates improvement in the overall electrical conductivity of the silicon-carbon negative electrode material, thereby improving the trapping possibility of lithium in the silicon-carbon negative electrode material, so as to improve the delithiation capacity of the electrochemical apparatus and the first charge and discharge properties.

Based on the fifth aspect, in some possible implementation, the carbonization conditions include increasing a temperature to 700°C to 1100°C and maintaining the temperature for 1 to 5 hours, and the activation is specifically implemented by means of carbon dioxide, water vapor, sodium hydroxide, potassium hydroxide or a phosphoric acid after carbonization cooling.

Based on the fifth aspect, in some possible implementations, the step of "performing silane deposition on the porous carbon skeleton to form a core, and then forming a shell by alkane" specifically includes: slowly increasing the temperature of the porous carbon skeleton in an inert atmosphere to 400°C to 600°C, then maintaining the temperature, and changing the atmosphere to a silane gas mixture, performing deposition for 1 to 20 hours, the silane gas mixture containing, in percentage by mass, 2% to 20% of silane and 80% to 98% of inert gas; and changing the atmosphere to an alkane gas mixture at 500°C to 1000°C, holding for 10 hours to form the shell, then changing the atmosphere to the inert atmosphere, and decreasing the temperature to a room temperature, the alkane gas mixture containing, in percentage by mass, 5% to 100% of alkane and 95% to 0% of inert gas.

### DETAILED DESCRIPTION

The following will clearly describe the technical solutions in embodiments of this application in detail. Obviously, the described embodiments are only part of the embodiments of this application, not all of the embodiments. Unless otherwise defined, all technical and scientific terms used herein have the same meaning as that generally understood by those skilled in the technical field of this application. The terms used in the specification of this application are for the purpose of describing specific embodiments only and are not intended to limit this application.

Hereinafter, embodiments of this application will be described in detail. However, this application may be embodied in many different forms and can not be construed as limited to exemplary embodiments illustrated herein. Instead, these exemplary embodiments are provided so that this application is communicated thoroughly and in detail to those skilled in the art.

Further, the use of "may" when describing the implementations of this application means "one or more implementations of this application.

The technical terms used herein are for the purpose of describing specific implementations and are not intended to limit this application. As used herein, the singular form is intended to include the plural form as well, unless the context explicitly states otherwise. It is to be further understood that the term "include", when used in the specification, refers to the presence of described features, values, steps, operations, elements and/or components, but does not exclude the presence or addition of one or more other features, values, steps, operations, elements, components and/or combinations thereof. A list of items linked by using the terms such as "at least one of", "at least one thereof", "at least one type of" or other similar terms may mean any combination of the listed items. For example, if items A and B are listed, the phrases "at least one of A and B" means: A alone; B alone; or both A and B. In another example, if items A, B, and C are listed, the phrases "at least one of A, B, and C" means: A alone; B alone; C alone; A and B (excluding C); A and C (excluding B); B and C (excluding A); or all of A, B, and C.

In this application, the design relations of greater than, less than, or not equal to between parameter values need to exclude reasonable errors of a measuring device.

One implementation of this application provides an electrochemical apparatus. The electrochemical apparatus includes a positive electrode plate, a negative electrode plate and a separator. The separator is arranged between the positive electrode plate and the negative electrode plate. The positive electrode plate, the separator and the negative electrode plate may be alternately stacked in sequence to form a laminated electrode assembly, or alternatively the positive electrode plate, the separator and the negative electrode plate are alternately stacked in sequence and then wound to form a wound electrode assembly.

The electrochemical apparatus further comprises a shell and an electrolyte solution, and the positive electrode plate, the negative electrode plate, the separator and the electrolyte solution are accommodated in the shell. The shell may be a packaging bag obtained by encapsulation using an encapsulation film, for example, but not limited to, an aluminum-plastic film, that is, the electrochemical apparatus may be a pouch battery. The shell may also be, but is not limited to, a shell of a steel-shell battery, an aluminum-shell battery, etc. disclosed in the prior art.

The positive electrode plate includes a positive current collector, and a positive active layer disposed on the positive current collector. The positive current collector may be an aluminum foil, a nickel foil or the like, or may be any composite current collector disclosed in the prior art, for example, but not limited to, a current collector formed by combining the conductive foil and a polymer substrate. The positive active layer contains a positive active material, and the positive active material contains a compound (namely a lithiated intercalation compound) with lithium ions reversibly intercalated and deintercalated. In some embodiments, the positive active material may include a lithium transition metal composite oxide. The lithium transition metal composite oxide contains lithium and at least one element selected from cobalt, manganese and nickel. In some embodiments, the positive active material may include, but is not limited to, at least one of lithium cobalt oxides (LiCoO₂), lithium-nickel-manganese-cobalt ternary materials (NCM), lithium manganate (LiMn₂O₄), lithium-nickel-manganese oxides (LiNi_{0.5}Mn_{1.5}O₄) or lithium iron phosphate (LiFePO₄).

The positive active layer further contains a binder for bonding positive active material particles so as to form a film layer, and moreover the bonding force between the positive active layer and the positive current collector can also be increased.

In some embodiments, the binder may include, but is not limited to, at least one of polyvinyl alcohol, hydroxypropyl cellulose, diacetyl cellulose, polyvinyl chloride, carboxylated polyvinyl chloride, polyvinyl fluoride, a polymer containing ethylidene oxygen, polyvinylpyrrolidone, polyurethane, polytetrafluoroethylene, poly(1,1-difluoroethylene), polyethylene, polypropylene, styrene-butadiene rubber, acrylic styrene-butadiene rubber, epoxy resin, nylon, or the like.

The positive active layer may further include a conductive material. The conductive material includes, but is not limited to, a carbon-based material, a metal-based material, a conductive polymer, or any combination thereof. In some embodiments, the carbon-based material may include, but is not limited to, natural graphite, artificial graphite, carbon black, acetylene black, Ketjen black, carbon fibers, or any combination thereof. In some embodiments, the metal-based material may include, but is not limited to, metal powders, or metal fibers, such as copper, nickel, aluminum, or silver. In some embodiments, the conductive polymer is a polyphenylene derivative.

The negative electrode plate includes a negative current collector and a negative active layer disposed on the negative current collector. The negative current collector may be at least one of a copper foil, a nickel foil, a stainless steel foil, a titanium foil, a carbon-based current collector or the like, or may be any composite current collector disclosed in the prior art, for example, but not limited to, a current collector formed by combining the conductive foil and the polymer substrate. The negative active layer contains a negative active material, and the negative active material includes a silicon-carbon negative electrode material.

The silicon-carbon negative electrode material includes a core and a shell. The core includes a porous carbon skeleton and silicon dispersed in pores of the porous carbon skeleton. Carbon nanotubes are wrapped and dispersed in the porous carbon skeleton. In the silicon-carbon negative electrode material, the content of silicon elements in the silicon-carbon negative electrode material is 25 wt% to 55 wt%. The shell includes a carbon material. In a linear scanning electron microscope and energy-dispersive X-ray spectrum of the cross section of the silicon-carbon negative electrode material, the standard deviation of content changes of the silicon elements from the center to the edge of the cross section does not exceed 200. Specifically, particles of the silicon-carbon negative electrode material are cut by an ion polishing method to form a cross section as a test surface. The cut silicon-carbon negative electrode material is transferred to a field emission scanning electron microscope, and the test surface is subjected to line scanning from the center to the outside. The content distribution of each element is recorded. For example, 100 data points of the content data of the silicon elements obtained by line scanning are collected equidistantly, and the collected 100 data points are subjected to standard deviation analysis of mathematical statistics to obtain the standard deviation of content changes of the silicon elements.

As the carbon nanotubes in the silicon-carbon negative electrode material have good electrical conductivity and mechanical properties, the carbon nanotubes with a specified content dispersed in the porous carbon skeleton can, on the one hand, improve the electrical conductivity of the silicon-carbon negative electrode material, and on the other hand, improve the mechanical properties of the silicon-carbon negative electrode material, and restrain the expansion of the silicon-carbon negative electrode material, thereby facilitating improvement in the structural stability. Moreover, according to the linear scanning electron microscope and energy-dispersive X-ray spectrum of the cross section of the silicon-carbon negative electrode material, it can be seen that the silicon elements in the silicon-carbon negative electrode material are distributed uniformly. By means of dispersion of the carbon nanotubes and uniform distribution of the silicon elements, the electrical conductivity and strength of the silicon-carbon negative electrode material can be improved, the trapping of lithium in the silicon-carbon negative electrode material is reduced, the expansion of the silicon-carbon negative electrode material is alleviated, and the initial coulombic efficiency of the electrochemical apparatus applying the negative electrode plate is improved, so as to improve the energy density and cycle performance of the electrochemical apparatus.

In some embodiments, the content of the silicon elements is 20% to 45%, thereby further reducing the expansion of the silicon-carbon negative electrode material and improving the cycle performance of the electrochemical apparatus.

In some embodiments, the electrical conductivity of the silicon-carbon negative electrode material is 9 S/cm to 30 S/cm. In some embodiments, the electrical conductivity of the silicon-carbon negative electrode material is 11 S/cm to 25 S/cm. In some embodiments, the electrical conductivity of the silicon-carbon negative electrode material is 9 S/cm, 11 S/cm, 14 S/cm, 20 S/cm, 25 S/cm, 30 S/cm or a value within the range formed by any two of said values. When the electrical conductivity of the silicon-carbon negative electrode material is within the above range, the electrical conductivity of the silicon-carbon negative electrode material can be guaranteed, thereby further improving the cycle performance of the electrochemical apparatus.

In some embodiments, the particle elastic modulus of the silicon-carbon negative electrode material is 4 GPa to 10 GPa, thereby facilitating guarantee of the mechanical strength of the silicon-carbon negative electrode material so as to relieve the internal stress, and further reducing the expansion of the silicon-carbon negative electrode material and improving the cycle performance of the electrochemical apparatus.

In some embodiments, in the silicon-carbon negative electrode material, the content of the carbon nanotubes is 0.2 wt% to 7.0 wt%. In some embodiments, the content of the carbon nanotubes is 1.0 wt% to 6.0 wt%. In some embodiments, the content of the carbon nanotubes is 0.2 wt%, 1.0 wt%, 1.5 wt%, 2.5 wt%, 4.5 wt%, 6.0 wt%, 6.5 wt%, 7.0 wt% or a value within the range formed by any two of said values. The content of the carbon nanotubes within the above range facilitates further alleviation of the volume expansion of the silicon carbon during lithiation, and can control the formation of pores during preparation of the porous carbon skeleton, reduce the ratio of large pores and improve the deposition uniformity of silicon, and ensure the initial efficiency (i.e. initial coulombic efficiency) of the electrochemical apparatus, thereby further improving the cycle performance of the electrochemical apparatus and reducing the cycle expansion rate of the electrochemical apparatus.

In some embodiments, an X-ray diffraction pattern of the silicon-carbon negative electrode material has a characteristic peak within the range of 20° to 30°, and the peak half width of the characteristic peak is greater than 2°, that is, the pores in the porous carbon skeleton are micropores, the diameter of 90% of pores in the porous carbon skeleton is less than 2 nm. That is to say, it is conducive to causing the size of the silicon of the porous carbon skeleton intercalated in the silicon-carbon negative electrode material to be mostly less than 2 nm, thereby facilitating further reduction of the expansion of the silicon-carbon negative electrode material.

Furthermore, the volume of pores having a diameter of greater than 2 nm in the silicon-carbon negative electrode material is greater than the volume of pores having a diameter of 2 nm or less. As the micropores have a better adsorption effect, the silicon is preferentially adsorbed and deposited in the micropores. Therefore, the size of the silicon in the silicon-carbon negative electrode material is mostly less than 2 nm, thereby facilitating further reduction of the expansion of the silicon-carbon negative electrode material. In some embodiments, the volume of the pores with the diameter of greater than 2 nm ranges from 0.04 to 0.20.

In some embodiments, the Raman spectrum of the silicon-carbon negative electrode material has a characteristic peak within the range of the 450 cm⁻¹ to 500 cm⁻¹, that is, the silicon in the silicon-carbon negative electrode material is small in size and amorphous, thereby facilitating further reduction of the expansion of the silicon-carbon negative electrode material.

The particle size Dv50 of the silicon-carbon negative electrode material may be 3 µm to 20 µm, and the particle size Dv99 of the silicon-carbon negative electrode material may be 3 µm to 20 µm, so that the silicon-carbon negative electrode material is more smooth when being subsequently mixed, stirred and coated with other materials (such as a binder) to form the negative active layer, and is easy to mix and match other materials.

The negative active material may further contain graphite. As the graphite has a certain flexibility, the graphite matches the silicon-carbon negative electrode material, which can alleviate the volume expansion of the negative active layer. Moreover, the graphite and silicon-carbon negative electrode material serve as the active material simultaneously, which facilitates reduction of the overall expansion of the negative active layer, and can also fully take the advantages of the silicon-carbon negative electrode material and the graphite to achieve the better electrochemical performance.

In the negative active material, the content of silicon-carbon negative electrode material may be 5 wt% to 40 wt%. Furthermore, the content of the graphite may be 95 wt% to 60 wt%.

The negative active layer further contains a binder for bonding positive active material particles so as to form a film layer, and moreover the bonding force between the negative active layer and the negative current collector can also be increased.

In some embodiments, the binder may include, but is not limited to, polyvinyl alcohol, hydroxypropyl cellulose, diacetyl cellulose, polyvinyl chloride, carboxylated polyvinyl chloride, polyvinyl fluoride, a polymer containing ethylidene oxygen, polyvinylpyrrolidone, polyurethane, polytetrafluoroethylene, poly(1,1-difluoroethylene), polyethylene, polypropylene, styrene-butadiene rubber, acrylic styrene-butadiene rubber, epoxy resin, nylon or the like.

The negative active layer may further include a conductive material. The conductive material includes, but is not limited to, a carbon-based material, a metal-based material, a conductive polymer or any combination thereof. In some embodiments, the carbon-based material may include, but is not limited to, natural graphite, artificial graphite, carbon black, acetylene black, Ketjen black, carbon fibers, or any combination thereof. In some embodiments, the metal-based material may include, but is not limited to, metal powder or metal fibers, such as copper, nickel, aluminum or silver. In some embodiments, the conductive polymer may be a polyphenylene derivative.

The separator includes a film layer having a porous structure, and the material thereof includes, but is not limited to, at least one of polyethylene, polypropylene, polyvinylidene fluoride, polyethylene terephthalate, polyimide, or aramid. For example, the separator may be a polypropylene porous film, a polyethylene porous film, a polypropylene non-woven fabric, a polyethylene non-woven fabric, a polypropylene-polyethylene-polypropylene porous composite film, or the like.

The electrolyte solution may be in one or more of a gel state, a solid state and a liquid state. In some embodiments, the liquid electrolyte solution includes a lithium salt and an organic solvent. The lithium salt may be one or more selected from, but not limited to, lithium hexafluorophosphate (LiPF₆), lithium tetrafluoroborate (LiBF₄), lithium hexafluoroarsenate (LiAsF₆), lithium perchlorate (LiClO₄), lithium tetraphenylborate (LiB(C₆H₅)₄), lithium trifluoromethanesulfonate (LiCH₃SO₃), lithium bis(fluorosulfonyl)imide (LiFSI), lithium bistrifluoromethanesulfonimide (LiTFSI), lithium trifluoromethanesulfonate (LiCF₃SO₃), lithium bis(trifluoromethanesulphonyl)imide (LiN(SO₂CF₃)₂), lithium tri((trifluoromethanesulfonyl)methyl (LiC(SO₂CF₃)₃), lithium bis(oxalate)borate (LiBOB) and lithium difluorophosphate (LiPO₂F₂). For example, LiPF₆ may be selected as the lithium salt, as it can provide a high ionic conductivity and improve cycle characteristics. The organic solvent may be a carbonate compound, a carboxylate compound, an ether compound, a nitrile compound, other organic solvents or a combination thereof. The examples of the carbonate compound include, but are not limited to, diethyl carbonate (DEC), dimethyl carbonate (DMC), dipropyl carbonate (DPC), methyl propyl carbonate (MPC), ethylene propyl carbonate (EPC), methyl ethyl carbonate (MEC), ethylene carbonate (EC), propylene carbonate (PC), butylene carbonate (BC), vinyl ethylene carbonate (VEC), fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methyl ethylene carbonate, 1-fluoro-1-methyl ethylene carbonate, 1,2-difluoro-1-methyl ethylene carbonate, 1,1,2-trifluoro-2-methyl ethylene carbonate, trifluoromethyl ethylene carbonate, or a combination thereof.

The above electrochemical apparatus is applied to an electronic apparatus, so as to supply power for other electronic elements in the electronic apparatus. The silicon-carbon negative electrode material in the above electrochemical apparatus is conducive to improving the cycle performance and energy density, thereby facilitating the electronic apparatus to prolong the service life. The electronic apparatus may include, but is not limited to, a notebook computer, pen-inputting computer, mobile computer, e-book player, portable phone, portable fax machine, portable photocopier, portable printer, head-mounted stereo headset, video recorder, liquid crystal display television set, handheld cleaner, portable CD player, mini CD-ROM, transceiver, electronic notepad, calculator, memory card, portable voice recorder, radio, backup power supply, electric motor, automobile, motorcycle, power-assisted bicycle, bicycle, lighting appliance, toy, game console, watch, electric tool, flashlight, camera, large household storage battery, lithium-ion capacitor, and the like.

This application further provides a preparation method for a silicon-carbon negative electrode material. The preparation method includes the following steps:
S1, mixing resin and the carbon nanotubes to form a mixture, and curing the mixture.

The means of forming the mixture includes, but is not limited to, ball milling. An organic solvent may also be added during mixing, thereby facilitating dispersion of the carbon nanotubes. The curing is drying and shaping the mixture, and can apply common curing conditions in the prior art, which are not described herein.

S2, carbonizing the cured mixture and then activating the mixture to obtain the porous carbon skeleton.

Specifically, the cured mixture is heated to 700 °C to 1100 °C in an inert atmosphere (such as, but not limited to, a nitrogen atmosphere), carbonized for 1 to 5 hours, cooled to a room temperature, and then activated to form the porous carbon skeleton. The activation may be performed on the carbonized structure by means of carbon dioxide and water vapor, or by means of alkali etching or acid etching. The alkali etching generally may be performed by using sodium hydroxide or potassium hydroxide, and the acid etching generally may be performed by using a phosphoric acid.

S3, performing silane deposition on the porous carbon skeleton to form the core, and then forming the shell with a carbon coating layer by alkane for coating the core.

Specifically, the porous carbon skeleton is slowly heated to 400°C to 600°C in an inert atmosphere (such as, but not limited to, an argon atmosphere), and then transferred to a silane gas mixture for deposition for 1 to 20 hours to form the core, where the slow heating rate may be, but is not limited to, 0.5°C/min to 5°C/min, and the silane gas mixture contains, in percentage by mass, 2% to 20% of silane and 80% to 98% of inert gas (such as, but not limited to, an argon gas).

Then, the atmosphere is changed to an alkane gas mixture at 500°C to 1000°C to hold for 2 to 20 hours, so as to form the shell with the carbon coating layer for coating the core, then the atmosphere is changed to the inert atmosphere (such as, but not limited to, a nitrogen atmosphere), and the shell is cooled to a room temperature to finally obtain the silicon-carbon negative electrode material, where the alkane gas mixture includes contains, in percentage by mass, 5% to 100% of silane (such as, but not limited to, acetylene) and 0% to 95% of inert gas (such as, but not limited to, an argon gas).

### Embodiment 1

### Preparing a negative electrode plate:

1) 1) Preparing a silicon-carbon negative electrode material: mixing linear phenolic resin (RF), hexamethylenetetramine (HMT) and carbon nanotubes (CNTs) at a weight ratio (recorded in Table 1) to form a mixture, where the mixing form is ball milling, the ball-milling rotation speed is 500 r/min, and the ball-milling time is 6 h. Heating the dark black ball-milled mixture to 130°C and maintaining the temperature for 10 h for curing. Transferring the cured mixture to a box-type furnace, increasing the temperature to 900°C in a nitrogen atmosphere, carbonizing the mixture for 2 h, and then transferring the carbonized mixture into a rotary furnace after being cooled, and activating the mixture in a carbon dioxide atmosphere for 9 h to obtain a porous carbon skeleton. Continuing to heat the porous carbon skeleton to 500°C at the speed of 2°C/min in an argon atmosphere, then changing the atmosphere to a silane gas mixture (in percentage by mass, 20% of silane and 80% of argon gas), performing deposition at 500°C for 10 h to form a core, changing the atmosphere to an acetylene gas mixture (in percentage by mass, 20% of acetylene and 80% of argon gas), continuing to perform deposition at 500°C for 10 h, and then changing the atmosphere to a nitrogen gas for cooling to a room temperature of 25°C, so as to obtain the silicon-carbon negative electrode material.
2) Taking the mixture of graphite and the above silicon-carbon negative electrode material at a weight ratio of 80: 20 as a negative active material, fully stirring and mixing the negative active material, styrene-butadiene rubber (SBP) and sodium carboxymethyl cellulose (CMC) at a weight ratio of 97: 2: 1 in a proper amount of deionized water, so as to form a uniform negative slurry, where the solid content of the negative slurry is 40 wt%. Coating a copper foil of a negative current collector with the slurry, drying at 85 °C, then performing cold pressing, slicing and slitting, and drying at 120 °C in vacuum for 12 hours to obtain a negative electrode plate.

Preparing a positive electrode plate: Fully stirring and mixing lithium cobalt oxides (LiCoO₂), conductive carbon black Super P and polyvinylidene difluoride (PVDF) as a positive active material at a weight ratio of 97: 1.4: 1.6 in a proper amount of N-methyl-pyrrolidone (NMP) solvent so as to form a uniform positive slurry, where the solid content of the positive slurry is 72 wt%. Coating an aluminum foil of a positive current collector with the slurry, drying at 85°C, then performing cold pressing, slicing and slitting, and drying at 85°C in vacuum for 4 hours to obtain a positive electrode plate.

Preparing an electrolyte solution: In a dry argon atmosphere glove box, uniformly mixing ethylene carbonate (EC), ethyl methyl carbonate (EMC) and diethyl carbonate (DEC) at a mass ratio of EC: EMC: DEC = 30: 50: 20, then adding a lithium salt LiPF₆, and uniformly mixing to obtain an electrolyte solution, in which the mass percentage of LiPF₆ is 12.5%.

Preparing a separator: Using a polyethylene (PE) porous polymer film of approximately 7 µm in thickness as a separator.

Preparing a lithium-ion battery: Sequentially stacking and winding the positive electrode plate, the separator and the negative electrode plate, welding tabs and then placing in an aluminum-plastic film packaging bag. Then, injecting the electrolyte solution, and after vacuum packaging, standing, formation, shaping, capacity testing and other procedures, obtaining a lithium-ion pouch battery.

For specific steps for preparing lithium-ion batteries in Embodiments 2-12 and Comparative Embodiments 1-3, refer to Embodiment 1, and the differences can be seen from

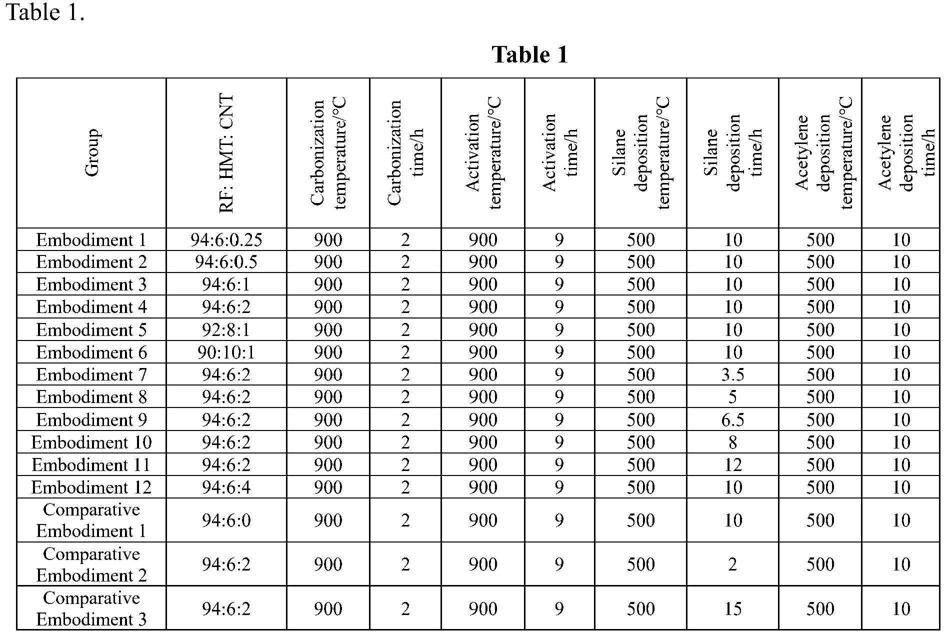

The initial efficiency test of the lithium-ion battery is performed on button batteries formed by negative electrode plates of the above embodiments and comparative embodiments. The specific test method is as follows: taking the negative electrode plate with a single side coated, prepared in a corresponding embodiment or comparative embodiment, cutting the negative electrode plate into an area of 1.54 cm² as a working electrode, then taking a lithium sheet as a counter electrode and a porous polyethylene film as the separator, injecting the electrolyte solution, and then performing assembly to obtain a button battery; discharging the button battery to 0 V at 0.05 C/50 µA/20 µA in three stages successively, and recording the initial discharge capacity of the button battery; and then, charging the button battery to 2.0 V at a constant current of 0.1 C, and recording the initial charge capacity of the button battery. Initial efficiency = initial charge capacity/initial charge capacity × 100%; and first reversible gram capacity of the negative active material from 0 V to 2.0 V = initial charge capacity of the button battery/mass of the negative active material. The electrolyte solution contains, in percentage by mass, 12.5% of lithium salt LiPF₆, and a solvent is obtained by mixing ethylene carbonate (EC) and diethyl carbonate (DEC) at a mass ratio of 1: 1. The initial efficiency obtained by test for the button batteries corresponding to the embodiments and the comparative embodiments is recorded in Table 2.

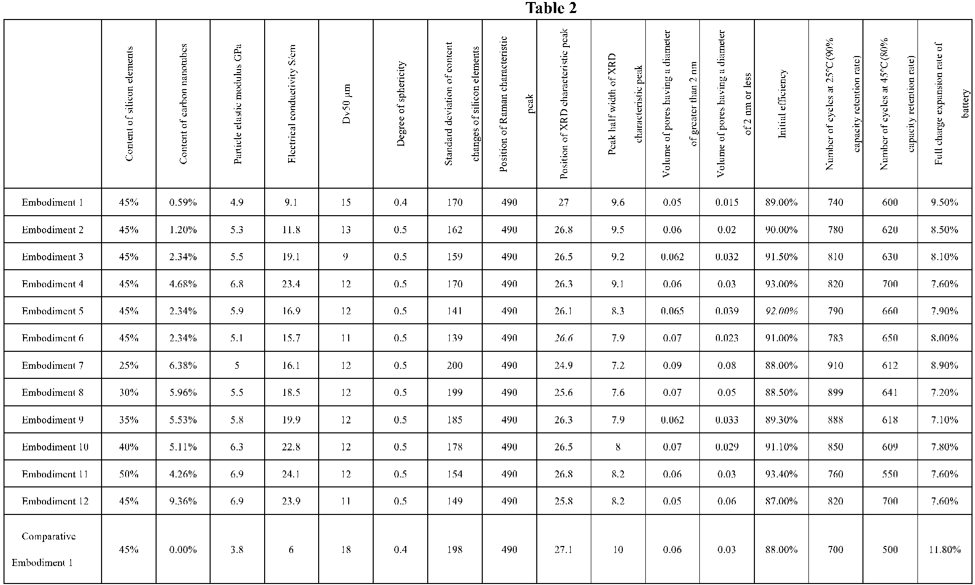

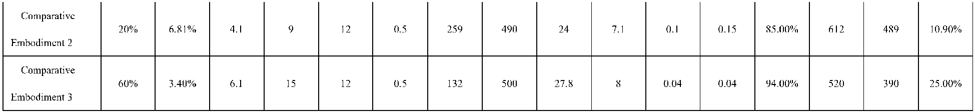

The elemental analysis is performed on the silicon-carbon negative electrode material in the above embodiments and comparative embodiments by means of line scanning with a scanning electron microscope, and the specific method is as follows: cutting the negative electrode plate obtained in a corresponding embodiment or comparative embodiment by an ion polishing method to form a cross section, then taking the cut cross section of the silicon-carbon negative electrode material as a test surface of a sample to be tested, transferring the cross section into a field emission scanning electron microscope, and testing same after focusing. During testing, performing line scanning from the center of particles to the outside, testing silicon elements in the silicon-carbon negative electrode material, recording the content distribution of the silicon elements, then performing variance analysis on scanning values to obtain standard deviations, and recording the standard deviations in Table 2.

The contents of the silicon elements and carbon nanotubes in the silicon-carbon negative electrode material in the above embodiments and the comparative embodiments are measured.

The silicon content in the silicon-carbon negative electrode material is measured by an ICP (an inductively coupled plasma spectrometer).

The specific method for measuring the content of the carbon nanotubes is as follows: firstly, according to the total amount of RF and HMT added in Comparative Embodiment 1 and the weight of an obtained porous carbon skeleton, calculating the yield of the RF + HMT during mixing/curing/carbonizing/activation, and recording the yield as d%; then, recording the yield of RF + HMT + CNTs in other embodiments during mixing/curing/carbonizing/activation, and recording the yield as e%; then, the ratio of the CNTs in the porous carbon skeleton in the embodiment satisfying f% = (e-d)/e × 100%, and the ratio of the rest components of the porous carbon skeleton satisfying g% = 1 - f%; the content of the CNTs in the silicon-carbon negative electrode material in the embodiment satisfying h%= f/(f + g + b) × 100%, recording the content in Table 2, and the content of the rest components of the porous carbon skeleton satisfying i% = 1 - h% - b%.

The electrical conductivity of the silicon-carbon negative electrode material in the embodiments and the comparative embodiments is tested, and the specific test method is as follows: testing the electrical conductivity of the silicon-carbon negative electrode material powder by means of a powder conductivity meter (model: FT-8100), based on a four-probe test principle, and referring to GB/T1552-1995. Compressing a volume to a set pressure value or pressure under hydraulic power by using a known mount of silicon-carbon negative electrode material powder, measuring the electrical conductivity of the silicon-carbon negative electrode material powder on line, and recording data in Table 2.

The particle strength of the silicon-carbon negative electrode material in the embodiments and comparative embodiments is tested, and the specific test method is as follows: testing the hardness and elastic modulus of a single particle of the silicon-carbon negative electrode material by means of a nanoindenter (model: Hysitron TI 950), and the test standard is JB/T 12721-2016. Before testing, dispersing the silicon-carbon negative electrode material powder in epoxy resin for curing, cutting the cured resin by an ion polishing method, pressing the single particle by using a nanoprobe, monitoring the depth of an indentation on the particle surface, and converting the depth into the elastic modulus of the particle. Testing the elastic moduli of five particles for the same sample in parallel, and then averaging the elastic moduli, so as to obtain the elastic modulus of the particles of the silicon-carbon negative electrode material, and recording the elastic modulus in Table 2.

The cycle performance and full charge expansion rate are tested on a lithium-ion pouch battery in the embodiments and comparative embodiments.

The specific method for testing the cycle performance is as follows: charging the battery to 4.4 V at a constant current of 0.7 C, charging the battery to 0.025 C at a constant voltage, standing for 5 minutes, and then discharging the battery to 3.0 V at 0.5 C. Taking the capacity obtained in this step at the initial capacity, performing 0.7 C charging/0.5 C discharging for cycle testing, and comparing the capacity in each step with the initial capacity to obtain a capacity decay curve. Recording the number of cycles (recorded in Table 2) at 25°C to reach 90% capacity retention rate as the room temperature cycle performance of the battery, recording the number of cycles (recorded in Table 2) at 45°C to reach 80% capacity retention rate as the high temperature cycle performance of the battery, and comparing the cycle performance of the material by means of comparing the numbers of the cycles under the above two conditions.

The specific method for testing the full charge expansion rate of the battery is as follows: measuring the thickness of a new lithium-ion pouch battery by means of a screw micrometer during half charge (50% SOC), when reaching 400 cycles, the battery being in a full-charge (100% SOC) state, measuring the thickness of the battery by means of the screw micrometer, comparing with the thickness of the new battery at initial half charge (50% SOC), to obtain the expansion rate of the battery at full charge (100% SOC), and recording the expansion rate in Table 2.

### Particle size test:

Adding approximately 0.02 g of the sample of the silicon-carbon negative electrode material powder to a 50 ml clean beaker, adding approximately 20 ml of deionized water, then dropwise adding 3 drops of 1% surfactant to cause the silicon-carbon negative electrode material powder to be completely dispersed in water, performing ultrasonication for 5 minutes by using a 120 W ultrasonic cleaning machine, and measuring the particle size thereof by using MasterSizer 2000.

### Raman test

Loading the silicon-carbon negative electrode material on a flat slide for Raman test, a test range being from 100 cm⁻¹ to 1200 cm⁻¹; upon completion of test, focusing on characteristic peaks within the range of 450 cm⁻¹ to 550 cm⁻¹; and taking the maximum point of the peak value as the peak position of this peak, and taking 1/2 of the difference value of the horizontal coordinate at the half peak as the peak half width of this peak.

### XRD test

Loading the silicon-carbon negative electrode material on a sample tray for XRD test, a test range being 10° to 90°, and a scanning speed being 5°/min; and upon completion of test, focusing on characteristic peaks within the range of 15° to 35°; taking the maximum point of the peak value as the peak position of this peak, and taking 1/2 of the difference value of the horizontal coordinate at the half peak as the peak half width of this peak.

### Determination/test method of pore volume

Measuring the pore volume of the silicon-carbon negative electrode material by using an N₂ gas adsorption method, obtaining adsorption/desorption data, and using a NRDFT model for pore structure fitting to respectively obtain the pore volume data < 2 nm and > 2 nm.

It can be seen from the data recorded Table 1 and Table 2 that, especially as for Comparative Embodiment 1 and other embodiments, the strength of the silicon-carbon negative electrode material is improved after the carbon nanotubes are added, and therefore the ability to buffer the volume expansion of the battery is improved, thereby facilitating improvement in cycle performance of the battery. In addition, the electrical conductivity of the silicon-carbon negative electrode material is also improved after the carbon nanotubes are added, thereby improving the electron diffusion capacity of the silicon-carbon negative electrode material and reducing the trapping possibility of lithium ions in silicon carbon, so as to improve the initial efficiency thereof and the energy density. The content of the carbon nanotubes is too high and easily affects the initial efficiency. Specifically, the content of the carbon nanotubes is too high, when forming pores during formation of the porous carbon skeleton, the ratio of large pores is easily too high, and consequently subsequent silicon is not prone to deposition, resulting in increase in specific surface area of a final product, and an SEI film in the electrochemical apparatus is increased, thereby affecting the initial efficiency. Similarly, the content of the silicon in Comparative Embodiment 2 is too low, so that the pores in the porous carbon skeleton are filled insufficiently, resulting in increase in specific surface area of the finial product, and an SEI film in the electrochemical apparatus is increased, thereby affecting the initial efficiency. From comparison between Comparative Embodiment 3 with other embodiments, it can be seen that the content of the silicon in the silicon-carbon negative electrode material is too high, the binding capacity of the carbon nanotubes is limited, and the battery expansion is serious, resulting in deterioration of the cycle performance.

The above disclosure is only a better implementation of this application, of course, can not be used to limit this application, so the equivalent changes made in accordance with this application are still covered by the scope of this application.

## Claims

1. A silicon-carbon negative electrode material, comprising a core and a shell, wherein the core comprises a porous carbon skeleton and silicon dispersed in pores of the porous carbon skeleton, and carbon nanotubes are dispersed within the porous carbon skeleton; in the silicon-carbon negative electrode material, a content of silicon elements in the silicon-carbon negative electrode material is 25 wt% to 55 wt%, and the shell includes a carbon material; and
in a linear scanning electron microscope and energy-dispersive X-ray spectrum of a cross section of the silicon-carbon negative electrode material, a standard deviation of content changes of the silicon elements from a center to an edge of the cross section does not exceed 200.

2. The silicon-carbon negative electrode material according to claim 1, wherein an electrical conductivity of the silicon-carbon negative electrode material is 9 S/cm to 30 S/cm, and/or a particle elastic modulus of the silicon-carbon negative electrode material is 4 GPa to 10 GPa.

3. The silicon-carbon negative electrode material according to claim 1 or 2, wherein a content of the carbon nanotubes is 0.2 wt% to 7 wt%.

4. The silicon-carbon negative electrode material according to any one of claims 1 to 3, wherein the silicon-carbon negative electrode material satisfies at least one of the following conditions:
(1) an X-ray diffraction pattern of the silicon-carbon negative electrode material has a characteristic peak within a range of 20° to 30°, and a peak half width of the characteristic peak is greater than 2°;
(2) a Raman spectrum of the silicon-carbon negative electrode material has a characteristic peak within a range of 450 cm⁻¹ to 500 cm⁻¹; and
(3) a particle size Dv50 of the silicon-carbon negative electrode material is 3 µm to 20 µm, and a particle size Dv99 of the silicon-carbon negative electrode material is 3 µm to 20 µm.

5. The silicon-carbon negative electrode material according to any one of claims 1 to 4, wherein a volume of pores having a diameter of greater than 2 nm in the silicon-carbon negative electrode material is greater than a volume of pores having a diameter of 2 nm or less.

6. An electrochemical apparatus, comprising a positive electrode plate, a negative electrode plate and a separator; wherein the negative electrode plate comprises a negative current collector and a negative active layer; and the negative active layer comprises a negative active material, wherein the negative active material comprises the silicon-carbon negative electrode material according to any one of claims 1 to 5.

7. The electrochemical apparatus according to claim 6, wherein the negative active material further comprises graphite, in the negative active material, a content of the silicon-carbon negative electrode material is 5 wt% to 40 wt%, and a content of the graphite is 95 wt% to 60 wt%.

8. A preparation method for the silicon-carbon negative electrode material according to claim 1, comprising:
mixing a resin and the carbon nanotubes to form a mixture, and curing the mixture;
carbonizing the cured mixture, and then activating the mixture to obtain the porous carbon skeleton; and
performing silane deposition on the porous carbon skeleton to form the core, and then forming the shell by alkane.

9. The preparation method for the silicon-carbon negative electrode material according to claim 8, wherein carbonization conditions comprise increasing a temperature to 700°C to 1100°C and maintaining the temperature for 1 to 5 hours, and the activation is specifically implemented by means of carbon dioxide, water vapor, sodium hydroxide, potassium hydroxide or a phosphoric acid after carbonization cooling.

10. The preparation method for the silicon-carbon negative electrode material according to claim 8 or 9, wherein a step of "performing silane deposition on the porous carbon skeleton to form a core, and then forming a shell by alkane" specifically comprises:
slowly increasing a temperature of the porous carbon skeleton in an inert atmosphere to 400°C to 600°C, then maintaining the temperature, changing the atmosphere to a silane gas mixture, performing deposition for 1 to 20 hours, wherein the silane gas mixture contains, in percentage by mass, 2% to 20% of silane and 80% to 98% of inert gas; and changing the atmosphere to an alkane gas mixture at 500°C to 1000°C, holding for 10 hours to form the shell, then changing the atmosphere to the inert atmosphere, and decreasing the temperature to a room temperature, wherein the alkane gas mixture contains, in percentage by mass, 5% to 100% of alkane and 0% to 95% of inert gas.
